# EUROPÄISCHE PATENTSCHRIFT

(11) **EP 0 602 331 B1**
(45) Veröffentlichungstag und Bekanntmachung des Hinweises auf die Patenterteilung: **15.11.1995**
(21) Anmeldenummer: 93115161.7
(22) Anmeldetag: 20.09.1993
(51) Int. Cl.: B62D 21/15

(54) **Kraftfahrzeug mit bei Kollision leicht deformierbaren Längsträgern**
Motor vehicle with longitudinal beams deformable in a crash
Véhicule à moteur à poutres longitudinales déformables en cas de collision

(30) Priorität: 12.12.1992 DE 4242029
(43) Veröffentlichungstag der Anmeldung: 22.06.1994
(73) Patentinhaber: Volkswagen Aktiengesellschaft, 38436 Wolfsburg (DE)
(72) Erfinder: Dolla, Franz, Dipl.-Ing., D-38550 Isenbüttel (DE)

(56) Entgegenhaltungen:
- EP-A- 0 318 769
- DE-A- 3 925 989
- DE-A- 4 208 700
- DE-B- 1 680 029
- DE-C- 3 925 990
- FR-A- 2 439 124
- FR-A- 2 440 304
- GB-A- 1 462 464

## Beschreibung

Die Erfindung betrifft ein Kraftfahrzeug gemäß dem Oberbegriff des Patentanspruchs 1.

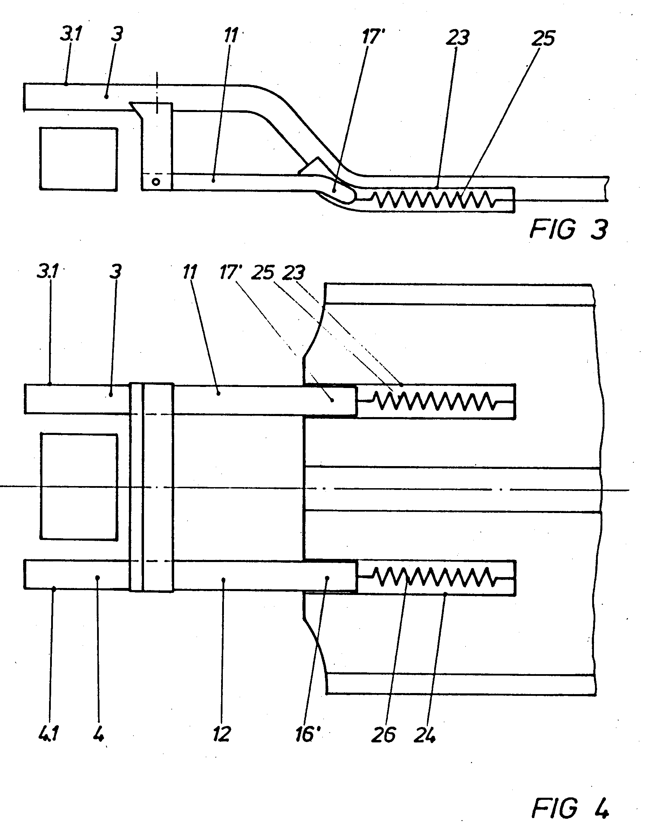

Ein gattungsgemäßes Kraftfahrzeug ist bekannt aus der DE-39 25 990-C2 (B62D21/15). Diese offenbart eine Baugruppe für den Front- und Heckbereich eines Fahrzeugs, deren wesentliche Bestandteile Karosserielängsträger und eine dort als Fahrschemel bezeichnete Hilfsrahmenkonstruktion sind. Die einzelnen Elemente der Baugruppe sind dabei so zueinander angeordnet, daß im Kollisionsfalle der Fahrschemel an Seitenlängsträgern abgestützt wird, die in Längsrichtung steif sind. Dadurch soll erreicht werden, daß die Fahrgastzellenstirnwand weder beschädigt noch verformt wird. Nachteilig an dieser Konstruktion ist jedoch die Tatsache, daß mit dem Fahrschemel verbundene Längsträger bei einer Kollision in Richtung Fahrgastzelle verschoben werden und somit ursächlich an einer Deformation des Fußraums beteiligt sind (siehe dort Figur 3).

Die Aufgabe der Erfindung besteht darin, die nachteiligen Eigenschaften gattungsgemäßer Kraftfahrzeuge zu vermeiden.

Diese Aufgabe wird gelöst durch die kennzeichnenden Merkmale des Patentanspruchs 1. Die Unteransprüche enthalten zweckmäßige Weiterbildungen der Erfindung.

Erfindungsgemäß werden also die Karosserielängsträger in Trägerabschnitte aufgeteilt, deren Nachgiebigkeit verschieden groß ist. Ein erster der Außenseite des Kraftfahrzeugs zugeordneter Trägerabschnitt ist energieverzehrend nachgiebig und kann somit einen Teil der kinetischen Aufprallenergie in Deformationsenergie umwandeln. Darin angeschlossen ist ein zweiter Trägerabschnitt, der so leicht deformierbar ausgelegt ist, daß bei einem Kollisionsfall die Fahrgastzelle von diesem kaum merklich verformt werden kann. Der Übergang vom ersten Trägerabschnitt zum zweiten Trägerabschnitt befindet sich im Bereich von Befestigungspunkten, an denen der Hilfsrahmen mit den Längsträgern verbunden ist.

Gemäß einer Weiterbildung der Erfindung erfolgt die Abstützung des Hilfsrahmens nicht wie bei gattungsgemäßen Kraftfahrzeugen an einem in Längsrichtung steifen Deformationsträger, sondern an einem energieverzehrenden Trägerbauteil, das in einem von dem Fußraum entfernten Bereich der Fahrgastzelle befestigt ist. Durch diese Maßnahme wird erreicht, daß nicht nur die Karosserielängsträger und der Hilfsrahmen, sondern auch andere Bereiche der Fahrgastzelle zur Umwandlung von kinetischer Energie in Deformationsenergie beitragen können. Besonders vorteilhaft ist dabei ein Abbau der kinetischen Energie in Bereichen, die dem Mitteltunnel zugeordnet sind. Anders als bei gattungsgemäßen Kraftfahrzeugen wird dadurch die Gefahr des Knickens von Seitenlängsträgern vermieden, so daß auch nach einer sehr schweren Kollision die Fahrzeugtüren problemlos geöffnet werden können.

Ein bevorzugtes Ausführungsbeispiel der Erfindung ist in der Zeichnung dargestellt. Es zeigt
- Figur 1:: in schematischer Darstellung die Seitenansicht einer ersten Variante eines erfindungsgemäßen Kraftfahrzeuges,
- Figur 2:: in schematischer Darstellung eine Unteransicht des Kraftfahrzeugs gemäß Figur 1.
- Figur 3:: in schematischer Darstellung die Seitenansicht einer zweiten Variante eines erfindungsgemäßen Kraftfahrzeuges und
- Figur 4:: in schematischer Darstellung eine Unteransicht des Kraftfahrzeuges gemäß Figur 3.

Gleiche Bauteile sind in allen Figuren gleich beziffert.

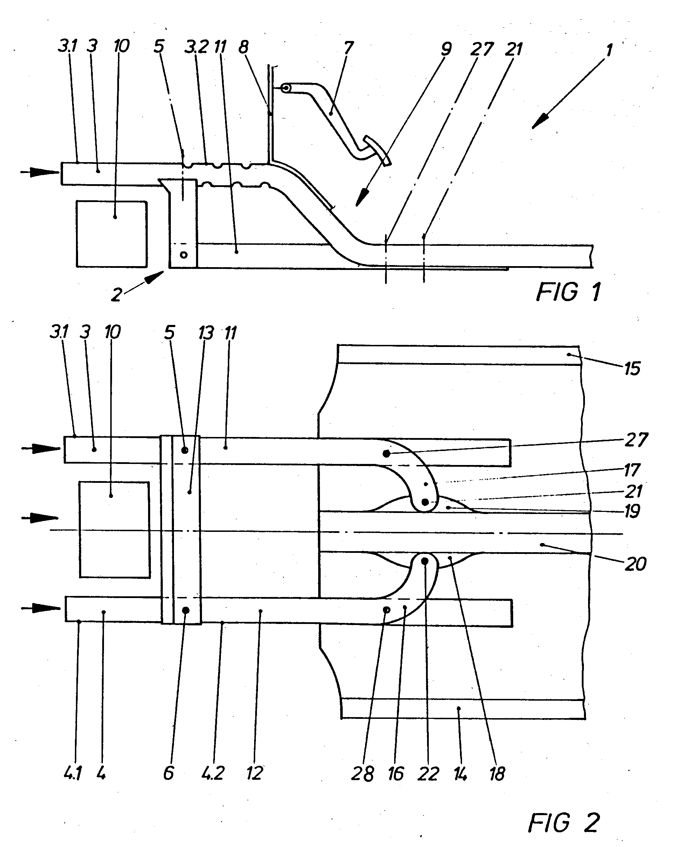

Man erkennt in Figur 1 für eine erste erfindungsgemäße Variante ein nur ausschnittsweise dargestelltes Kraftfahrzeug 1 mit einer Hilfsrahmenkonstruktion 2, die an Karosserielängsträgern 3 und 4 (siehe Figur 2) befestigt ist. Diese Befestigung erfolgt mittels Schraubverbindungen 5 und 6 (siehe Figur 2) an hier mit Strichlinien angedeuteten Befestigungspunkten. Diese unterteilen die Karosserielängsträger 3 und 4 in einen energieverzehrenden ersten Abschnitt 3.1 bzw. 4.1 und einen leicht verformbaren zweiten Trägerabschnitt 3.2 bzw. 4.2. Mit hier nicht weiter bezifferten Sicken im zweiten Trägerabschnitt 3.2 soll diese leichte Deformierbarkeit angedeutet werden. Durch ein mit 7 bezeichnetes Fußpedal, welches an einer Stirnwand der Fahrgastzelle 8 angeordnet ist, soll die Lage eines Fußraumbereichs 9 verdeutlicht werden. Ein mit 10 bezeichnetes Antriebsaggregat ist so angeordnet, daß es bei einer Kollision die Hilfsrahmenkonstruktion 2 beaufschlagt und diese relativ zur Fahrgastzelle 8 des Kraftfahrzeugs 1 verschiebt.

Aus der in Figur 2 dargestellten Unteransicht ist ersichtlich, daß die Hilfsrahmenkonstruktion 2 hier im wesentlichen aus Hilfslängsträgern 11 und 12 besteht, die über einen Querträger 13 beispielsweise durch eine Schraub- oder Schweißverbindung miteinander verbunden sind. Während die Karosserielängsträger 3 und 4 an Seitenlängsträger 14 und 15 befestigt sind, stützen sich die Hilfslängsträger 11 und 12 mit geknickten Endbereichen 16 und 17 an Flanschteilen 18 und 19 eines Mitteltunnels 20 ab. An den Flanschteilen 18 und 19 sind Anlenkpunkte 21 und 22 vorgesehen, die einem energieverzehrend nachgiebigen Abschnitt des Mitteltunnels 2 zugeordnet sind und in Fahrzeuglängsrichtung soweit nach hinten verlagert worden sind, daß bei einer Einleitung der Aufprallenergie in den Bodenbereich des Kraftfahrzeugs 1 der Fußraum 9 durch die Hilfsrahmenkonstruktion 2 kaum mitverformt wird.

Aus den Figuren 1 und 2 ist zu ersehen, daß bei einer Kollision zunächst die Trägerabschnitte 3.1 bzw. 4.1 und dann das Antriebsaggregat 10 beaufschlagt werden. Dabei bauen sowohl diese ersten Trägerabschnitte als auch die Hilfsrahmenkonstruktion 2 in den geknickten Endbereichen 16 und 17 kinetische Energie ab. Die leicht verformbar ausgelegten zweiten Trägerabschnitte 3.2 bzw. 4.2 stützen sich im wesentlichen an der Stirnwand der Fahrgastzelle 8 ab. Die Nachgiebigkeit dieser zweiten Trägerabschnitte 3.2 bzw. 4.2 ist so gewählt worden, daß bei einer Kollision eine Verformung der Fahrgastzellenstirnwand praktisch nicht stattfindet. Der Fußraum 9 wird also weder durch die Karosserielängsträger 3 und 4 noch durch die Hilfsrahmenkonstruktion 2 bei einer Kollision direkt in Mitleidenschaft gezogen. Dies wird insbesondere auch dadurch erreicht, daß die Hilfslängsträger 11 und 12 im Kollisionsfall relativ zum Boden des Kraftfahrzeugs 1 beweglich sind und erst über die Anlenkpunkte 21 und 22 Verformungen in die Fahrgastzelle 8 des Kraftfahrzeugs 1 einbringen.

An dieser Stelle sei darauf hingewiesen, daß im Bereich vor der Fahrgastzelle 8 die Karosserielängsträger 3, 4 nicht in genau zwei Abschnitte unterteilt sein müssen. Vorstellbar ist auch eine Reihenschaltung von mehr als zwei Trägerabschnitten. Der Übergang zu niedrigeren Steifigkeiten kann dabei in diskreten Schritten oder aber kontinuierlich erfolgen.

Bei der aus den Figuren 3 und 4 ersichtlichen zweiten Variante sind die Endbereiche 16' und 17' leicht nach unten angeschrägt und werden mit diesen Schrägen in hülsenartigen Profilteilen 23 und 24 gehalten. In diesen sind Deformationselemente 25 und 26 angeordnet, an denen im Kollisionsfall die Hilfslängsträger 11 und 12 abgestützt werden. Die Steifigkeit der Deformationselemente 25, 26 ist größer als diejenige der ersten Abschnitte 3.1, 4.1 der Karosserielängsträger 3, 4 und auch größer als diejenige der Hilfslängsträger 11, 12. Dadurch wird erreicht, daß ein Maximum an Bauteilen an der Energieumwandlung beteiligt wird. Die Gleitschräge in den Endbereichen 16' und 17' sorgt dafür, daß die Hilfsrahmenkonstruktion 2 unter einem Anstellwinkel gegen die Fahrgastzelle 8 verschoben wird. Dies verhindert bei einem Crash ein durch Knicken bedingtes Aufstellen der Karosserielängsträger 3, 4, weil diese über die Befestigungspunkte 5, 6 von der Hilfsrahmenkonstruktion 2 nach unten gezogen werden.

Schließlich sind mit 27 und 28 in Figur 1 noch Stützmittel bezeichnet, mittels derer die Hilfslängsträger 11, 12 ebenfalls eine Verbindung zur Fahrgastzelle 8 des Kraftfahrzeugs aufweisen. Die besondere Bedeutung dieser Stützmittel besteht darin, daß sie die Abstützung von Fahrwerkelementen am Hilfsrahmen 2 stabilisieren. Bezogen auf Aufprallkräfte sind sie jedoch so dimensioniert, daß sie leicht abscheren und die Verschiebung der Hilfsrahmenkonstruktion 2 unter die Fahrgastzelle 8 nicht beeinträchtigen.

Verständlicherweise ist die Erfindung nicht auf das in der Zeichnung dargestellte Ausführungsbeispiel beschränkt. So ist es beispielsweise denkbar, die Anlenkpunkte 21, 22 in Mittelbereiche zu verlegen, die sich zwischen den Seitenlängsträgern 14, 15 und dem Mitteltunnel 20 befinden. Diese Mittelbereiche sind bezüglich der Seitenlängsträger 14, 15 mit einem ausreichend großen Abstand zu wählen, damit auch bei schweren Kollisionen die Seitenlängsträger 14, 15 nicht knicken können. Dies hätte äußerst nachteilige Folgen im Hinblick auf die Funktionsfähigkeit der Fahrzeugtüren nach einem Unfall, weil diese gegebenenfalls durch verknickte Seitenlängsträger verklemmt werden könnten.

Gegenüber dem eingangs genannten Stand der Technik weisen die in den Figuren 1 bis 4 dargestellten Ausführungsbeispiele noch den Vorteil auf, daß nicht nur die Karosserielängsträger 3, 4 und die Hilfsrahmenkonstruktion 2, sondern auch Abschnitte der Kraftfahrzeugkarosserie, wie beispielsweise der Mitteltunnel 20 zum Abbau von kinetischer Energie mit herangezogen werden. Auf diese Weise kann insbesondere bei kleinen Fahrzeugen mit quer eingebauten Antriebsaggregaten auf engstem Raum viel kinetische Energie in Deformationsenergie umgewandelt werden. Dies ist insbesondere auch dann der Fall, wenn die Anlenkung der Hilfslängsträger 11 und 12 an einem Deckblech erfolgt, daß zur Bildung eines Hohlprofils mit dem Fahrgastzellenboden auf dessen Unterseite gegenüber dem Fußraum 9 angeordnet ist.

## Patentansprüche

1. Kraftfahrzeug (1) mit wenigstens zwei Karosserielängsträgern (3, 4) und mit einem Hilfsrahmen (2), der
- im wesentlichen zwei mittels wenigstens eines Querträgers (13) verbundene Hilfslängsträger (11, 12) aufweist,
- mit einer einen Fußraum (9) aufweisenden Fahrgastzelle (8) über Aufnahmemittel (5, 6) verbunden ist, die bei einer Kollision eine Verschiebung des Hilfsrahmens (2) relativ zur Fahrgastzelle (8) zulassen,
- an einem der Fahrgastzelle (8) zugeordneten Trägerbauteil abstützbar ist,
dadurch gekennzeichnet, daß
der Hilfsrahmen (2) und die Karosserielängsträger (3, 4) an Befestigungspunkten (5, 6) miteinander verbunden sind, die die Karosserielängsträger (3, 4) in wenigstens einen energieverzehrenden ersten (3.1, 3.2) und wenigstens einen leicht deformierbaren, der Fahrgastzelle (8) zugewandten, zweiten Trägerabschnitt unterteilen.

2. Kraftfahrzeug nach Anspruch 1, dadurch gekennzeichnet, daß der Hilfsrahmen (2) an einem energieverzehrenden Trägerbauteil (Mitteltunnel 20) abstützbar ist, daß in einem von dem Fußraum (9) entfernten Bereich der Fahrgastzelle (8) gehalten ist.

3. Kraftfahrzeug nach Anspruch 2, dadurch gekennzeichnet, daß das energieverzehrende Trägerbauteil ein Mitteltunnel (20) ist.

4. Kraftfahrzeug nach Anspruch 2, dadurch gekennzeichnet, daß das energieverzehrende Trägerbauteil an einem dem Mitteltunnel (20) benachbarten Mittelbereich abstützbar ist.

5. Kraftfahrzeug nach Anspruch 2, dadurch gekennzeichnet, daß das energieverzehrende Trägerbauteil ein Deckblech ist, das zur Bildung eines Hohlprofils mit dem Fahrgastzellenboden auf dessen Unterseite gegenüber dem Fußraum (9) angeordnet ist.

6. Kraftfahrzeug nach Anspruch 2, dadurch gekennzeichnet, daß das energieverzehrende Trägerbauteil durch ein hülsenartiges Profilteil (23, 24) gebildet ist, das auf der Unterseite der Fahrgastzelle (8) angeordnet und mit einem Deformationselement (25, 26) versehen ist, welches seinerseits durch einen Hilfslängsträger (11, 12) beaufschlagbar ist.

7. Kraftfahrzeug nach Anspruch 6, dadurch gekennzeichnet, daß das Deformationselement (25, 26) eine höhere Steifigkeit aufweist als der erste Trägerabschnitt (3.1, 4.1) der Karosserielängsträger (3, 4).

8. Kraftfahrzeug nach Anspruch 6, dadurch gekennzeichnet, daß das Deformationselement (25, 26) eine höhere Steifigkeit aufweist als der Hilfslängsträger (11, 12).

9. Kraftfahrzeug nach Anspruch 6, dadurch gekennzeichnet, daß die hülsenartigen Profilteile (23, 24) durch unterhalb der Fahrgastzelle (8) verlaufende Abschnitte der Karosserielängsträger (3, 4) gebildet werden, in die entsprechend gestaltete Endbereiche (16, 17) der Hilfslängsträger (11, 12) bei einer Kollision unter Beaufschlagung der Deformationselemente eintauchen.

## Claims

1. Motor vehicle (1) having at least two chassis frame longitudinal beams (3,4) and having an auxiliary frame (2), which comprises substantially two auxiliary longitudinal beams (11, 12) which are connected by means of at least one transverse bar (13) and which auxiliary frame is connected by way of a receiving means (5,6) to a passenger compartment (8) comprising a foot space (9), which in the event of a collision allow the auxiliary frame (2) to displace relative to the passenger compartment (8), which auxiliary frame can be supported on a carrier component associated with the passenger compartment (8), characterised in that the auxiliary frame (2) and the chassis frame longitudinal beams (3, 4) are connected to each other at attachment points (5,6), which divide the chassis frame longitudinal beams (3,4) into at least one energy-absorbing first carrier portion (3.1, 3.2) and at least one easily deformable second carrier portion which faces the passenger compartment (8).

2. Motor vehicle according to claim 1, characterised in that the auxiliary frame (2) can be supported on an energy-absorbing carrier component (middle tunnel 20), which is held in a region of the passenger compartment (8) which region is remote from the foot space (9).

3. Motor vehicle according to claim 2, characterised in that the energy-absorbing carrier component is a middle tunnel (20).

4. Motor vehicle according to claim 2, characterised in that the energy-absorbing carrier component can be supported on a middle region adjacent to the middle tunnel (20).

5. Motor vehicle according to claim 2, characterised in that the energy-absorbing carrier component is a cover sheet which for the purpose of forming a hollow profile with the passenger compartment floor is disposed on the lower side thereof opposite the foot space (9).

6. Motor vehicle according to claim 2, characterised in that the energy-absorbing carrier component is formed by a sleeve-shaped profiled part (23, 24) which is disposed on the lower side of the passenger compartment (8) and is provided with a deformation member (25, 26), which for its part is acted upon by an auxiliary longitudinal beam (11, 12).

7. Motor vehicle according to claim 6, characterised in that the deformation member (25, 26) is more rigid than the first carrier portion (3.1, 4.1) of the chassis frame longitudinal beam (3, 4).

8. Motor vehicle according to claim 6, characterised in that the deformation member (25, 26) is more rigid that the auxiliary longitudinal beam (11, 12).

9. Motor vehicle according to claim 6, characterised in that the sleeve-shaped profiled parts (23, 24) are formed by portions of the chassis frame longitudinal beams (3, 4) which extend below the passenger compartment (8) and in the event of a collision the said profiled parts receive by acting upon the deformation members the correspondingly shaped end regions (16, 17) of the auxiliary longitudinal beams (11, 12).

## Revendications

1. Véhicule à moteur (1) avec au moins deux longerons (3, 4) de support de la carrosserie et avec un châssis auxiliaire (2), qui
- présente essentiellement deux longerons auxiliaires (11, 12) reliés par au moins une traverse support (13),
- est relié à un habitacle (8) présentant un emplacement pour les pieds (9) au moyen d'organes de réception (5, 6), qui permettent en cas de collision un déplacement du châssis auxiliaire (2) par rapport à l'habitacle (8),
- peut s'appuyer sur un élément de support associé à l'habitacle (8),
véhicule à moteur caractérisé en ce que le châssis auxiliaire (2) et les longerons (3, 4) de support de la carrosserie sont reliés les uns aux autres en des points de fixation (5, 6), qui subdivisent les longerons (3, 4) de support de la carrosserie en au moins une première section de longeron (3.1, 3.2) qui absorbe de l'énergie et au moins une seconde section de longeron facilement déformable, tournée vers l'habitacle (8).

2. Véhicule à moteur selon la revendication 1, caractérisé en ce que le châssis auxiliaire (2) peut s'appuyer sur un élément porteur qui absorbe de l'énergie (tunnel central 20), qui est maintenu dans une zone de l'habitacle (8) éloignée de l'emplacement pour les pieds (9).

3. Véhicule à moteur selon la revendication 2, caractérisé en ce que l'élément porteur qui absorbe de l'énergie est un tunnel central (20).

4. Véhicule à moteur selon la revendicatioin 2, caractérisé en ce que l'élément porteur, qui absorbe de l'énergie, peut s'appuyer sur une zone médiane voisine du tunnel central (20).

5. Véhicule à moteur selon la revendication 2, caractérisé en ce que l'élément porteur, qui absorbe de l'énergie, est une tôle de recouvrement, qui est disposée de façon à former un profilé creux avec le plancher de l'habitacle sur sa face inférieure par rapport à l'emplacement pour les pieds (9).

6. Véhicule à moteur selon la revendication 2, caractérisé en ce que l'élément porteur, qui absorbe de l'énergie, est constitué par une pièce profilée en forme de manchon (23, 24), qui est disposée sur la face inférieure de l'habitacle (8) et est pourvue d'un élément de déformation (25, 26), qui de son côté peut être sollicité par un longeron auxiliaire (11, 12).

7. Véhicule à moteur selon la revendication 6, caractérisé en ce que l'élément de déformation (25, 26) présente une rigidité plus élevée que la première section de longeron (3.1, 4.1) des longerons (3, 4) qui supportent la carrosserie.

8. Véhicule à moteur selon la revendication 6, caractérisé en ce que l'élément de déformation (25, 26) présente une rigidité plus élevée que les longerons auxiliaires (11, 12).

9. Véhicule à moteur selon la revendication 6, caractérisé en ce que les éléments profilés en forme de manchons (23, 24) sont formés par des sections des longerons (3, 4), qui supportent la carrosserie, s'étendant en-dessous de l'habitacle (8), sections dans lesquelles s'enfoncent les zones terminales, conformées en conséquence (16, 17) des longerons auxiliaires (11, 12) en cas de collision en sollicitant les éléments de déformation.
